# FASCICULE DE BREVET EUROPEEN

(11) **EP 3 482 113 B1**
(45) Date de publication et mention de la délivrance du brevet: **08.07.2020**
(21) Numéro de dépôt: 17745787.6
(22) Date de dépôt: 20.06.2017
(51) Int. Cl.: F16L 13/02, B23K 9/028, B23K 31/02, B23K 101/10

(54) **PROCEDE DE RACCORDEMENT DE DEUX ELEMENTS UNITAIRES D'UNE CONDUITE SOUS-MARINE DE TRANSPORT DE FLUIDES SOUMISE A LA FATIGUE**
VERFAHREN ZUM VERBINDEN VON ZWEI EINZELNEN ELEMENTEN EINES ERMÜDUNGSBEHAFTETEN UNTERWASSER-FLÜSSIGKEITSTRANSPORTROHRES
METHOD FOR CONNECTING TWO INDIVIDUAL ELEMENTS OF AN UNDERWATER FLUID-TRANSPORT PIPE SUBJECT TO FATIGUE

(30) Priorité: 06.07.2016 FR 1656458
(43) Date de publication de la demande: 15.05.2019
(73) Titulaire: SAIPEM S.A., 78180 Montigny Le Bretonneux (FR)
(72) Inventeur: YOUSFI, Rachid, 20068 Peschiera Borromeo (IT); DOBRE, Stefan, Bucuresti (RO)
(74) Mandataire: Cabinet Beau de Loménie
(86) Numéro de dépôt international: PCT/FR2017/051627
(87) Numéro de publication internationale: WO 2018/007709

(56) Documents cités:
- DE-A1- 19 527 634
- GB-A- 2 462 149
- US-A1- 2015 084 333

## Description

### Arrière-plan de l'invention

La présente invention se rapporte au domaine général des conduites sous-marines de transport de fluide qui sont soumises en fonctionnement à la fatigue. Elle concerne plus particulièrement les conduites pour le transfert d'hydrocarbures, par exemple de pétrole et de gaz, assurant une liaison fond-surface ou une liaison entre deux supports flottant.

Les conduites de liaison fond-surface ou de liaison entre deux supports flottant utilisées pour le transfert d'hydrocarbures, appelées ci-après « riser » en anglais, sont typiquement réalisées en remontant de manière continue des conduites préalablement posées au fond de la mer, directement vers un support flottant, par exemple en leur donnant une configuration de chaînette.

Les conduites qui sont ainsi remontées du fond pour former les risers doivent être réalisées au moyen de conduites flexibles lorsque la profondeur d'eau est inférieure à quelques centaines de mètres. Cependant, dès lors que la profondeur d'eau atteint et dépasse 800 à 1000m, les conduites flexibles sont remplacées par des conduites rigides constituées d'éléments de longueur unitaire de conduite qui sont soudés entre eux et réalisés dans un matériau résistant tel qu'en acier de forte épaisseur. Les risers rigides en matériau résistant, en configuration de chaînette sont communément appelés par le terme anglo-saxon « Steel Catenary Riser » ou SCR (signifiant « riser en acier en forme de chaînette »).

Les éléments unitaires d'une conduite qui est utilisée ultérieurement comme riser rigide sont raccordés les uns aux autres à bord d'un navire de pose et sont descendus au fond de la mer au fur et à mesure de leur raccordement. Cette pose peut s'effectuer par l'intermédiaire d'une tour de pose en J ou en S positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin.

Les techniques de pose en J et en S nécessitent de raccorder sur le navire de pose chaque nouvel élément unitaire de conduite à la conduite sous-marine avant de le descendre dans la mer en déplaçant le navire de pose vers l'avant d'une avance correspondant à la longueur de l'élément unitaire de conduite. Cette étape de raccordement s'effectue en soudant bout à bout l'extrémité libre en acier du nouvel élément unitaire de conduite sur celle de la conduite sous-marine déjà assemblée et descendue en mer.

Par ailleurs, les éléments unitaires de conduite sont généralement revêtus en usine d'un revêtement de protection, par exemple formé à base de résine époxy, à l'exception de leurs extrémités libres qui sont laissées libres d'un tel revêtement pour ne pas brûler par la chaleur dégagée lors du soudage. Lors de leur raccordement sur le navire de pose, les extrémités libres de la conduite sous-marine et du nouvel élément unitaire de conduite à assembler sont soudées entre elles. Une fois que ces extrémités sont soudées entre elles, le cordon de soudure est typiquement supprimé par une opération de meulage, puis un revêtement à base de résine époxy est appliqué par fusion à la fois sur le cordon de soudure ainsi découpé et sur les extrémités raccordées respectives de l'élément unitaire de conduite et de la conduite sous-marine afin de reconstituer le revêtement de protection sur toute la longueur de la conduite. Préalablement à l'application par fusion du revêtement, il est requis de réaliser une opération de sablage des surfaces de la conduite afin d'obtenir un état de surface rugueux de l'acier qui améliore l'adhésion du revêtement de protection sur la conduite.

Le meulage du cordon de soudure est une étape particulièrement importante lors du raccordement d'un nouvel élément unitaire de conduite sur la conduite sous-marine car il permet de supprimer tout accident géométrique au niveau du cordon de soudure qui pourrait être à l'origine de fissures. En effet, les risers rigides sont des conduites qui sont soumises à de fortes contraintes dynamiques et d'importantes déformations qui nécessitent de garantir leur tenue à la fatigue. Or, cette tenue à la fatigue passe notamment par une grande résistance à la fissure des soudures réalisées entre les différents éléments unitaires de la conduite. De plus, une fois le meulage du cordon de soudure réalisé, il est de pratique courante de réaliser une inspection manuelle du résultat obtenu (à l'aide d'une sonde ultrasonique) afin de vérifier que tout accident géométrique a bien été supprimé et de contrôler la soudure à cet endroit pour s'assurer qu'elle respecte bien les critères de qualité des normes de soudage.

Un tel procédé de raccordement présente certains inconvénients. En particulier, il nécessite un temps d'opération de meulage et d'inspection qui est relativement long (près de 20mn par soudure). De plus, le résultat obtenu après le meulage n'est pas toujours convenable. L'inspection peut notamment révéler que le cordon de soudure a été endommagé lors du meulage ou qu'il ne respecte pas les critères de qualité des normes de soudage, ce qui nécessite de devoir refaire le cordon de soudure.

On connaît également du document WO 2008/139116 un procédé de raccordement de deux éléments unitaires en acier d'une conduite dans lequel on vient effectuer une opération de martelage localisé à l'intérieur de la conduite pour augmenter la compression de l'acier au niveau des cordons de soudures. Bien que fiable en termes de résistance à la fatigue au niveau des cordons de soudure, une telle opération de martelage revêt un caractère relativement fastidieux et nécessite d'intervenir par l'intérieur de la conduite avec des outils de martelage adéquats.

Un procédé de raccordement de deux éléments unitaires d'une conduite sous-marine de transport de fluides est également connu du document GB 2462149 A.

### Objet et résumé de l'invention

La présente invention a donc pour but principal de proposer un procédé de raccordement qui ne présente pas les inconvénients précités.

Conformément à l'invention, ce but est atteint grâce à un procédé de raccordement de deux éléments unitaires d'une conduite sous-marine de transport de fluides soumise à la fatigue, comprenant le soudage des deux éléments unitaires de conduite métalliques ou bi-métalliques mis bout à bout au niveau de leurs extrémités libres respectives en réalisant trois cordons de soudure distincts avec un dernier cordon de soudure déposé entre deux premiers cordons de soudure latéraux, directement suivi par un sablage contrôlé des cordons de soudure pour apporter des contraintes de compression au niveau de ces derniers.

Les inventeurs ont constaté de façon surprenante que le recours à trois cordons de soudure suivi directement par un sablage contrôlé de ces derniers permet d'apporter au niveau de ces cordons de soudure des contraintes de compression qui retardent l'initiation et la propagation des fissures dues à la fatigue à laquelle est soumise la conduite. Le recours à deux cordons de soudure de chaque côté des éléments unitaires à raccorder puis d'un troisième cordon de soudure entre les deux premiers, suivi directement par un sablage permet en outre d'obtenir des contraintes de compression qui évitent le recours à toute opération de meulage (le procédé selon l'invention est dépourvu de toute opération de meulage des cordons de soudure) et améliore de façon notable la durée de vie à la fatigue de l'assemblage au minimum de 300%.

Le soudage peut être réalisé dans une position verticale des éléments unitaires de conduite en déposant un dernier cordon de soudure entre deux premiers cordons de soudure latéraux.

De préférence, le sablage comprend en outre le sablage des extrémités raccordées des éléments unitaires de conduite. Ceci permet d'obtenir un élément de surface rugueux de la matière constitutive de la conduite, qu'elle soit en acier, en aluminium ou titane, qui améliore l'adhésion ultérieure du revêtement de protection sur la conduite.

Le procédé peut comprendre en outre, après le sablage, l'application par fusion sur les cordons de soudure et les extrémités raccordées des éléments unitaires de conduite d'un revêtement à base de résine époxy.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue de profil de deux éléments unitaires de conduite raccordés selon le procédé conforme à l'invention ; et
- la figure 2 est une vue en coupe de la figure 1 montrant les cordons de soudure.

### Description détaillée de l'invention

L'invention s'applique au raccordement de deux éléments unitaires d'une conduite sous-marine qui est soumise à la fatigue et utilisée pour le transport de fluides tels que des hydrocarbures, par exemple du pétrole et du gaz issus de puits de production sous-marins.

Un domaine d'application de l'invention est celui des conduites déposées au fond de mer et remontées en surface pour être utilisées comme risers rigides, c'est-à-dire comme liaisons fond-surface ou comme liaisons entre deux supports flottant. Par support flottant, on entend par exemple une unité flottante de production, de stockage et de déchargement (également appelée FPSO pour « Floating Production Storage and Offloading » en anglais).

Les conduites utilisées comme risers rigides sont typiquement fabriquées à partir d'éléments unitaires de conduite métalliques raccordés par soudage entre eux (et de matière constitutive non limitée à l'acier). Plus précisément, les éléments unitaires d'une conduite qui est utilisée ultérieurement comme riser rigide sont raccordés les uns aux autres à bord d'un navire de pose et sont descendus au fond de la mer au fur et à mesure de leur raccordement. Cette pose peut s'effectuer par l'intermédiaire d'une tour de pose en J ou en S positionnée sur le navire de pose.

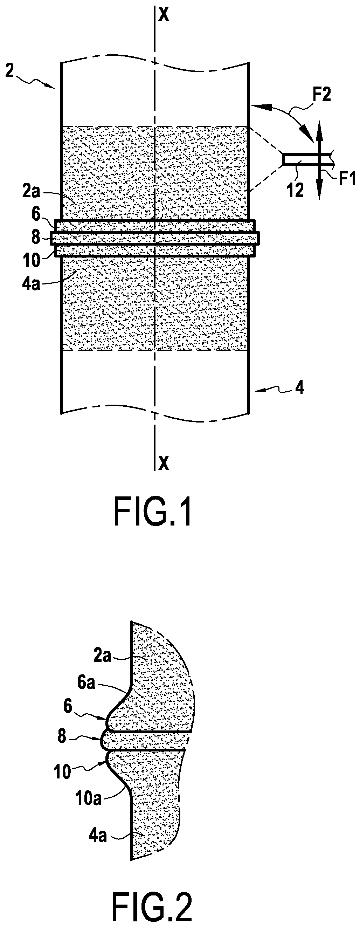

Le raccordement selon l'invention de deux éléments unitaires 2, 4 d'une telle conduite à bord d'un navire de pose est représenté de façon schématique sur la figure 1.

Lors d'une pose en J ou en S, les deux éléments unitaires de conduite 2, 4 en alliage d'acier sont en position verticale. Ils sont mis bout à bout en alignant leurs extrémités libres respectives 2a, 4a selon le même axe vertical X-X. Trois cordons de soudure 6, 8 et 10 distincts sont alors réalisés entre ces deux extrémités libres.

Les cordons de soudure 6, 8 et 10 sont réalisés depuis l'extérieur de la conduite par toute technique connue pour le soudage de deux éléments tubulaires en alliage d'acier. A titre d'exemple, on pourra utiliser une technique de soudage par arc électrique. Le matériau utilisé pour réaliser les cordons de soudure pourra typiquement être compatible avec toute nuance d'acier.

L'ordre de réalisation des trois cordons de soudure 6 à 10 est le suivant : les deux premières passes sont effectuées pour former les cordons de soudure latéraux (cordons 6 et 10 sur les figures 1 et 2), c'est-à-dire les cordons du côté des extrémités libres respectives 2a, 4a des éléments unitaires de conduite, puis la dernière passe est réalisée pour former un dernier cordon de soudure (cordon de soudure 8 sur les figures) entre les deux premiers cordons de soudure latéraux 6 et 10.

Le dernier cordon de soudure 8 réalisé entre les deux premières passes permet ainsi de réchauffer les deux cordons de soudure latéraux 6 et 10 qui auront eu tendance à se refroidir. De la sorte, en réchauffant de manière symétrique les cordons de soudure latéraux 6, 10, il est possible d'abaisser les duretés des deux premiers cordons de soudure aux extrémités libres 2a, 4a des deux éléments unitaires de conduite.

Une fois les cordons de soudure 6 à 10 réalisés et refroidis, le procédé de raccordement selon l'invention prévoit d'effectuer directement une opération de sablage contrôlé de ces cordons de soudure, ainsi que des extrémités raccordées des éléments unitaires de conduite. En particulier, aucune étape de meulage ou d'autre type de découpe mécanique des cordons de soudure n'est réalisée.

Le sablage est réalisé par toute technique connue. Par exemple, on pourra utiliser une ou plusieurs buses de projection 12 qui sont aptes à pouvoir translater le long de l'axe vertical X-X (mouvement F1 sur la figure 1) et à pivoter autour de celui-ci (mouvement F2 sur la figure 1).

Le sablage a notamment pour but de préparer les surfaces des extrémités raccordées des éléments unitaires de conduite pour obtenir un état de surface rugueux de l'acier qui améliore l'adhésion ultérieure d'un revêtement de protection sur la conduite (en particulier par application par fusion d'un revêtement à base de résine époxy). Pratiqué de façon contrôlée sur les cordons de soudure 6 à 10, le sablage permet également, de façon surprenante, d'apporter au niveau de ces cordons de soudure des contraintes de compression qui retardent l'initiation et la propagation des fissures dues à la fatigue à laquelle est soumise la conduite.

En pratique, le sablage est réalisé avec les mêmes paramètres de projection (abrasif et buses de projection) pour les extrémités raccordées des éléments unitaires de conduite que pour les cordons de soudure, à l'exception de la durée de projection qui est supérieure pour le sablage des cordons de soudure par rapport aux extrémités raccordées des éléments unitaires de conduite.

On décrira maintenant un exemple de mise en œuvre du procédé de raccordement selon l'invention.

Dans cet exemple, les éléments unitaires de conduite sont réalisés en tube bi-métallique comprenant de l'acier API 5L -X65 en partie extérieure et de l'acier en Inconel®625 (alliage nickel-chrome avec addition de molybdène et de niobium) en partie intérieure, le matériau utilisé pour réaliser les trois cordons de soudure étant également de l'Inconel®625.

Le traitement de sablage effectué directement après la réalisation des cordons de soudure est réalisé en utilisant par exemple comme abrasif du Profilium® 58. Le Profilium® 58 est un abrasif de grenaillage commercialisé par la société « W Abrasives ». Cet abrasif présente la composition chimique suivante : C ≥ 0,85% ; Si ≥ 0,4% ; 0,6% ≤ Mn ≤ 1,2% ; S ≤ 0,05% ; et P ≤ 0,05%. Il présente une dureté supérieure à 64 HRc et une densité minimale de 7,4.

Avec un tel traitement de sablage, il a été observé une amélioration notable (d'au moins 300%) de la durée de vie à la fatigue de l'assemblage des deux éléments unitaires de conduite (par rapport à un assemblage comprenant une opération de meulage).

Une fois l'opération de sablage effectuée, il est avantageusement prévu d'appliquer sur les extrémités raccordées des éléments unitaires de conduite et sur les cordons de soudure un revêtement de protection (contre la corrosion notamment), par exemple formé à base de résine époxy.

Typiquement, un tel revêtement est déposé par fusion à la fois sur les cordons de soudure et sur les extrémités raccordées des éléments unitaires de conduite afin de reconstituer le revêtement de protection sur toute la longueur de la conduite.

## Revendications

1. Procédé de raccordement de deux éléments unitaires (2, 4) d'une conduite sous-marine de transport de fluides soumise à la fatigue, comprenant le soudage des deux éléments unitaires de conduite métalliques ou bi-métalliques mis bout à bout au niveau de leurs extrémités libres respectives (2a, 4a) en réalisant trois cordons de soudure distincts (6, 8, 10) avec un dernier cordon de soudure (8) déposé entre deux premiers cordons de soudure latéraux (6, 10), directement suivi par un sablage contrôlé des cordons de soudure pour apporter des contraintes de compression au niveau de ces derniers.

2. Procédé selon la revendication 1, dans lequel il est dépourvu de meulage des cordons de soudure.

3. Procédé selon l'une des revendications 1 et 2, dans lequel le soudage est réalisé dans une position verticale des éléments unitaires de conduite.

4. Procédé selon l'une quelconque des revendications 1 à 3, dans lequel le sablage comprend en outre le sablage des extrémités raccordées des éléments unitaires de conduite.

5. Procédé selon la revendication 4, dans lequel le sablage est réalisé sur les extrémités raccordées des éléments unitaires de conduite et sur les cordons de soudure en utilisant un même abrasif projeté à partir d'une même buse, la durée de projection de l'abrasif sur les cordons de soudure étant supérieure à la durée de projection sur les extrémités raccordées des éléments unitaires de conduite.

6. Procédé selon l'une quelconque des revendications 1 à 5, comprenant en outre, après le sablage, l'application par fusion sur les cordons de soudure et les extrémités raccordées des éléments unitaires de conduite d'un revêtement à base de résine époxy.

## Patentansprüche

1. Verfahren zum Verbinden zweier unitärer Elemente (2, 4) einer Unterwasserleitung zum Transport von Fluiden, die einer Ermüdung unterworfen ist, umfassend das Verschweißen der beiden unitären metallischen oder bimetallischen Leitungselemente, die Ende an Ende im Bereich ihrer jeweiligen freien Enden (2a, 4a) angeordnet sind, indem drei verschiedene Schweißnähte (6, 8, 10) hergestellt werden, wobei eine letzte Schweißnaht (8) zwischen zwei ersten seitlichen Schweißnähten (6, 10) aufgebracht wird, direkt gefolgt von einem gesteuerten Sandstrahlen der Schweißnähte, um Druckspannungen an letzteren herbeizuführen.

2. Verfahren nach Anspruch 1, wobei die Schweißnähte nicht geschliffen werden.

3. Verfahren nach einem der Ansprüche 1 und 2, wobei das Schweißen in einer vertikalen Position der unitären Leitungselemente durchgeführt wird.

4. Verfahren nach einem der Ansprüche 1 bis 3, wobei das Sandstrahlen ferner das Sandstrahlen der verbundenen Enden der unitären Leitungselemente umfasst.

5. Verfahren nach Anspruch 4, wobei das Sandstrahlen an den verbundenen Enden der unitären Leitungselemente und an den Schweißnähten unter Verwendung desselben Strahlmittels durchgeführt wird, das aus derselben Düse ausgestoßen wird, wobei die Dauer des Ausstoßes des Strahlmittels auf die Schweißnähte länger ist als die Dauer des Ausstoßes auf die verbundenen Enden der unitären Leitungselemente.

6. Verfahren nach einem der Ansprüche 1 bis 5, ferner umfassend nach dem Sandstrahlen das Schmelzauftragen einer Beschichtung auf Epoxidharzbasis auf die Schweißnähte und die verbundenen Enden der unitären Leitungselemente.

## Claims

1. A method of connecting together two unit elements (2, 4) of an undersea fluid transport pipe that is subjected to fatigue, the method comprising welding together two metallic or bi-metallic unit pipe elements that have been put into abutment via their respective free ends (2a, 4a), the welding being done by making three distinct weld beads (6, 8, 10), with a last weld bead (8) being deposited between two lateral first weld beads (6, 10), and being followed directly by controlled sanding of the weld beads in order to apply compression stresses on them.

2. A method according to claim 1, wherein it does not include grinding the weld beads.

3. A method according to claim 1 or claim 2, wherein the welding is performed while the unit pipe elements are in a vertical position.

4. A method according to any one of claims 1 to 3, wherein the sanding further includes sanding the connected-together ends of the unit pipe elements.

5. A method according to claim 4, wherein the sanding is performed on the connected-together ends of the unit pipe elements and on the weld beads using the same abrasive projected from a common nozzle, the duration for which the abrasive is projected onto the weld beads being longer than the duration for which the abrasive is projected onto the connected-together ends of the unit pipe elements.

6. A method according to any one of claims 1 to 5, further comprising, after the sanding, applying a coating based on epoxy resin by melting both on the weld beads and also on the connected-together ends of the unit pipe elements.
